# EUROPEAN PATENT APPLICATION

(11) **EP 2 436 821 A1**
(43) Date of publication of application: **04.04.2012**
(21) Application number: 09845163.6
(22) Date of filing: 18.12.2009
(51) Int. Cl.: D06F 33/02, H02P 6/06, H02P 6/20, H02P 21/00, H02P 27/04

(54) **WASHING MACHINE**

(30) Priority: 25.05.2009 JP 2009125253
(71) Applicant: Kabushiki Kaisha Toshiba, Minato-ku Tokyo 105-8001 (JP); Toshiba Consumer Electronics Holdings Corporation, Tokyo 101-0021 (JP); Toshiba Home Appliances Corporation, Tokyo 101-0021 (JP)
(72) Inventor: SETO, Tomokazu, Tokyo 105-8001 (JP); SHIGA, Tsuyoshi, Tokyo 105-8001 (JP)
(74) Representative: O'Connell, David Christopher
(86) International application number: PCT/JP2009/007023
(87) International publication number: WO 2010/137096

(57) **Abstract**

Disclosed is a washing machine comprising a permanent magnet motor (11) that includes a rotor (92) and that drives rotation for execution of a wash operation; a permanent magnet (97) that is provided on the rotor side and that has a level of coercivity allowing variation in an amount of magnetism with ease, and a magnetism controller (30, 32) that produces an excitation current to vary the amount of magnetism of the permanent magnet (97); wherein the magnetism controller (30, 32), when interrupting or stopping an ongoing operation, interrupts or stops the ongoing operation after magnetizing the permanent magnet (97).

## Description

### TECHNICAL FIELD

The present invention relates to a washing machine that produces rotational drive for a wash operation by a permanent magnet motor comprising a rotor including a permanent magnet having a level of coercivity that allows its amount of magnetism to be readily varied.

### BACKGROUND

The applicants have conceived of applying motors such as those disclosed in patent publication 1 to a washing machine. The motor disclosed in patent publication 1 is configured such that some of the rotor magnets are composed of a permanent magnet having a level of coercivity that allows its amount of magnetism to be readily varied, thereby allowing the properties of the motor to be dynamically optimized. Such configuration is advantageous in executing a range of operations such as wash and dehydrate operations that require considerably varying output properties and in varying the motor torque properties depending upon laundry load.
Patent Publication 1: 2006-28095

### DISCLOSURE

### PROBLEM TO BE OVERCOME

Washing machines configured as described above, however, are likely to lack in torque when starting the motor after the ongoing operation has been interrupted with the permanent magnet in a demagnetized state or after power supply has been shutoff.
The present invention has been conceived to address the above concerns and one object of the present invention is to provide a washing machine that prevents shortage in output torque when staring the operation even after the operation has been interrupted or stopped.

### MEANS TO OVERCOME THE PROBLEM

A washing machine of claim 1 comprises a permanent magnet motor that includes a rotor and that drives rotation for execution of a wash operation; a permanent magnet that is provided on the rotor side and that has a level of coercivity allowing variation in an amount of magnetism with ease, and a magnetism controller that produces an excitation current to vary the amount of magnetism of the permanent magnet; wherein the magnetism controller, when interrupting or stopping an ongoing operation, interrupts or stops the ongoing operation after magnetizing the permanent magnet. According to the above described configuration, the permanent magnet is placed in a magnetized state when the interrupted operation is restarted or when a new series of operation is started. Thus, enough torque can be obtained for starting the permanent magnet motor.

A washing machine of claim 2 comprises a permanent magnet motor that includes a rotor and that drives rotation for execution of a wash operation; a permanent magnet that is provided on the rotor side and that has a level of coercivity allowing variation in an amount of magnetism with ease, and a magnetism controller that produces an excitation current to vary the amount of magnetism of the permanent magnet; wherein the magnetism controller magnetizes the permanent magnet immediately after supply of power. According to the above described configuration, enough torque can be obtained for starting the permanent magnet motor even if the previous washing machine operation was interrupted of terminated with the permanent magnet in the demagnetized state.

Further, a washing machine according to claim 10 comprises a permanent magnet motor that includes a rotor and that drives rotation for execution of a wash operation; a permanent magnet that is provided on the rotor side and that has a level of coercivity allowing variation in an amount of magnetism with ease, and a magnetism controller that produces an excitation current to vary the amount of magnetism of the permanent magnet; wherein the magnetism controller, when demagnetizing the permanent magnet, magnetizing the permanent magnet prior to the demagnetization. When demagnetizing a permanent magnet, it is difficult to control the amount of demagnetization with accuracy. However, when magnetizing the permanent magnet, it is relatively easy to saturate the amount of magnetization. Thus, the amount of demagnetization can be accurately controlled if demagnetization is executed based on the maximum amount of magnetization.

### EFFECT

According to the washing machine of claims 1 and 2, enough torque can be obtained to start the permanent magnet motor when resuming an interrupted operation or starting a new series of operation, thereby achieving improvement in reliability.

According to the washing machine of claim 10, the permanent magnet is magnetized prior to demagnetization to allow the amount of demagnetization to be controlled with greater accuracy and thereby allowing the output properties of the permanent magnet motor to be appropriately varied.

### BRIEF DESCRIPTION OF THE DRAWINGS

[FIG.1] FIG.1 represents a first embodiment and is a flowchart of a process executed at the end of the operation of the washing machine.
[FIG.2] FIG.2A is a flowchart of a magnetization process of an alnico magnet and FIG.2B is a flowchart of a demagnetization process of the same.
[FIG.3] FIG.3 is a chart indicating the relation between the stop position of the rotor and the level of each signal outputted from a rotation position sensor.
[FIG.4] FIG.4 is a chart indicating the steps involved in a full automatic operation of a washing machine in general and the increase/decrease in count of motor rotation with progression of steps.
[FIGS.5A and 5B] FIG.5A provides a plan view schematically illustrating the overall configuration of a drum motor, and FIG.5B provides a partially enlarged perspective view of a rotor.
[FIG.6] FIG.6 is a vertical cross sectional side view of a washer dryer.
[FIGS.7A and 7B] FIGS.7A and 7B taken together schematically illustrate a drive system of the drum motor.
[FIGS.8A and 8B] FIGS.8A and 8B taken together provide a functional block diagram of a sensorless vector control executed on the drum motor.
[FIG.9] FIG.9 represents a second embodiment and is a flowchart of a process executed when power is supplied.
[FIG.10] FIG.10 represents a third embodiment and corresponds to FIG.9.
[FIG.11] FIG.11 represents a fourth embodiment and is a flowchart of a process executed when a pause button is turned ON in the ongoing operation.
[FIG.12] FIG.12 represents a fifth embodiment and is a flowchart of a process executed when a power OFF button is turned ON in the ongoing operation.
[FIG.13] FIG.13 represents a sixth embodiment and corresponds to FIG.12 executed during a dehydrate step.
[FIG.14] FIG.14 represents a seventh embodiment and corresponds to FIG.13.
[FIG.15] FIG.15 represents an eighth embodiment and corresponds to FIG.12 or FIG.13.

### DESCRIPTION OF REFERENCE SYMBOLS

Reference symbol 4 represents a drum (rotary tub); 9, a door; 11, a drum motor (permanent magnet motor); 30, a control circuit (magnetism controller, weight detector, motor controller); 32, an inverter circuit (magnetism controller, motor controller); 48, a photocoupler (input status detector); 51, a rotational position sensor (rotation count detector); 92, a rotor; and 97, an alnico magnet (permanent magnet).

### EMBODIMENTS

### (First embodiment)

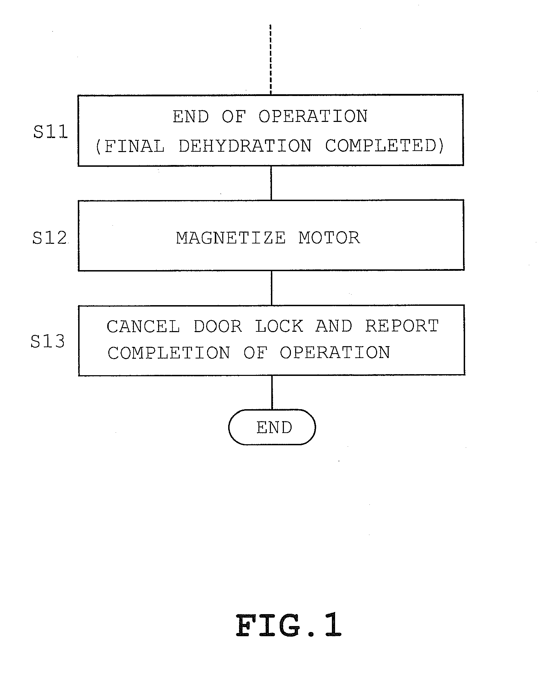

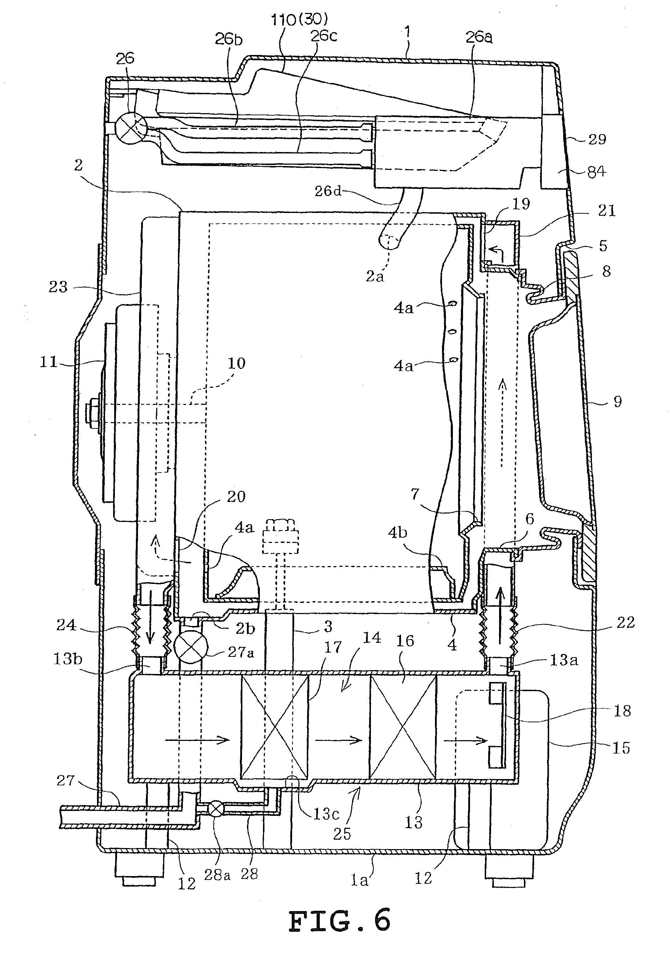

A first embodiment of the present invention applied to a heat pump washer dryer (laundry equipment) will be described hereinafter with reference to FIGS.1 to 8. Referring to FIG.6 illustrating a vertical cross sectional view of a washer dryer, exterior housing 1 contains water tub 2 which is elastically supported by a plurality of support sections 3 so as to be oriented horizontally. Water tub 2 contains rotary drum 4 (hereinafter simply referred to as drum 4) provided coaxially with water tub 2. Drum 4 is provided with multiplicity of dehydrate pores 4a, though only partially shown, defined on its peripheral wall and rear wall that also serve as air pores. Thus, drum 4 also functions as a wash tub, a dehydrate tub, and a dry chamber. Drum 4 is further provided with a plurality of baffles 4b on its inner surface, (only one of which is shown for simplicity).

Exterior housing 1, water tub 2 and drum 4 each have openings 5, 6, and 7 respectively at their front sides (right side as viewed in the drawings), for loading and unloading of laundry. Openings 5 and 6 establish a watertight communication through elastically deformable bellows 8. Opening 5 of exterior housing 1 is opened/closed by door 9. Drum 4 is provided with rotary shaft 10 extending from its rear surface which is supported by a bearing (not shown) to be driven by drum motor 11 (wash/dehydrate motor, permanent magnet motor). Drum motor 11 comprises an outer rotor three-phase brushless DC motor mounted on the rear exterior of water tub 2. Rotary shaft 10 is integral with the rotary shaft of drum motor (hereinafter simply referred to as motor) 11. Thus, drum 4 is driven in a direct drive method by drum motor 11.

On bottom plate 1a of exterior housing 1, casing 13 is provided via a plurality of support elements 12 and casing 13 has exhaust 13a defined on its upper right end and inlet 13b on its upper left end respectively. Bottom plate 1a further has compressor 15 constituting heat pump (refrigeration cycle) 14 provided on it. Casing 13 further contains capacitor 16 and evaporator 17 also constituting heat pump 14 in the listed sequence from right to left. Casing 13 further contains blower fan 18 in its right end interior. Further, provided within casing 13 is a disc-shaped water receiver 13c located below evaporator 17.

Water tub 2 has intake 19 at its upper front face and exhaust 20 at its lower rear face. Intake 19 communicates with outlet 13a of casing 13 through linear duct 21 and an extendible connection duct 22. Exhaust 20 communicates with inlet 13b of casing 13 through annular duct 23 and an extendible connection duct 24. Annular duct 23 is mounted at the rear exterior of water tub 2, so as to be co-axial with motor 11. That is, the entrance of annular duct 23 is connected to exhaust 20 and its exit is connected to inlet 13b through connection duct 24. Casing 13, connection duct 22, linear duct 21, intake 19, exhaust 20, annular duct 23 and connection duct 14 constitute air circulation path 25.

Exterior housing 1 further contains a three-way water valve 26 at its upper rear portion and detergent feeder 26a at its upper front portion. Water valve 26 has its water intake connected to a faucet through a supply hose for taking in tap water; its first water outlet connected to the upper water inlet of detergent feeder 26a through wash water hose 26b; and a second water outlet connected to the lower water inlet of detergent dispenser 26a through rinse water hose 26c. The water outlet of detergent feeder 26a is connected to supply port 2a defined on the upper portion of water tub 2 through water hose 26d.

At the bottom rear portion of water tub 2, drain section 2b is defined which is connected to drain hose 27 through drain valve 27a. A portion of drain hose 27 is extendible. Water receiver 13c of casing 13 is connected to an intermediate portion of drain hose 27 through drain hose 28 and check valve 28a.

Control panel 29 is provided on the upper front face of exterior housing 1 and includes user interfaces such as a display and various operation switches not shown. On the rear side of control panel 29, display/operation circuit board 57 is provided and control panel 29 is controlled through communication with control circuit (magnetism controller, weight detector) 30 provided in circuit board case 110. Control circuit 30 is configured by a microcomputer and executes wash, rinse, and dehydrate operations through control of water valve 26, motor 11, and drain valve 27a, and executes dry operation through control of motor 11 and compressor motor (not shown) comprising a three phase brushless DC motor that drives compressor 15 in response to user operation of operation switches provided on control panel 29.

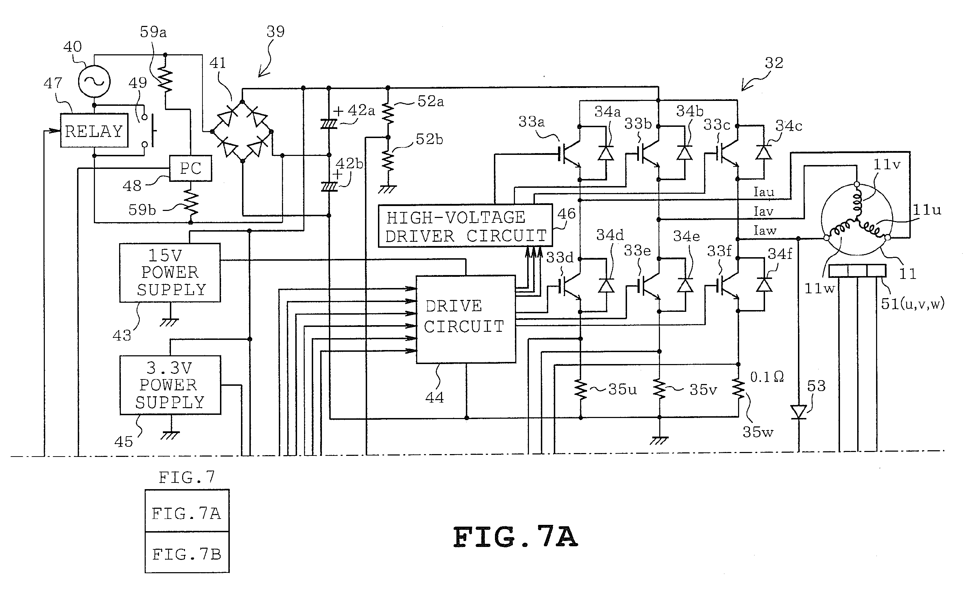

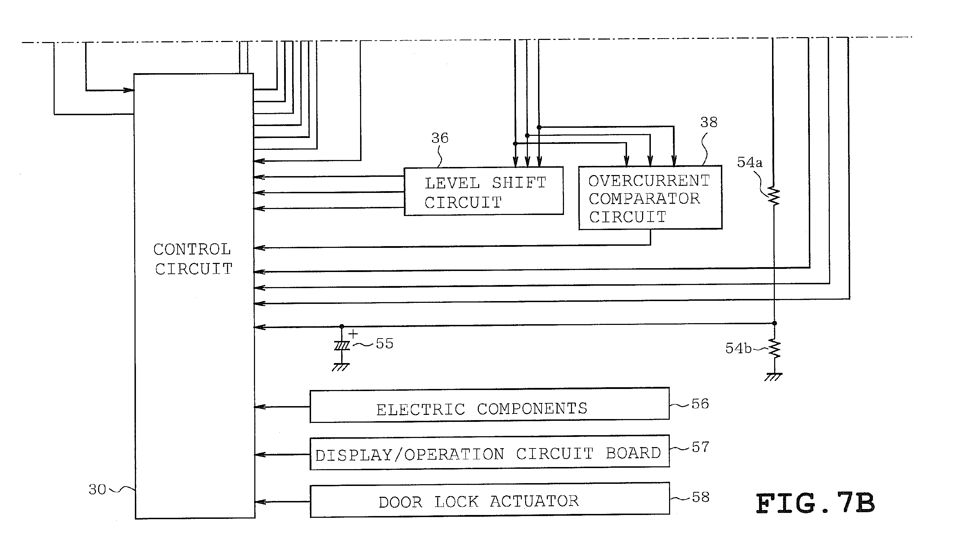

FIGS.7A and 7B schematically illustrate the drive system of motor 11. Inverter circuit (PWM controlled inverter) 32 is configured by a three-phase bridge connection of six semiconductor switching devices such as IGBTs (Insulated Gate Bipolar Transistor) 33a to 33f. Each of the six IGBTs 33a to 33f has one of flywheel diodes 34a to 34f connected between its collector and emitter. Emitters of IGBTs 33d, 33e, 33f situated in the lower arm are grounded through shunt resistances (current detecting element) 35u, 35v, and 35w. The common connection point between the emitters of IGBTs 33d, 33e, and 33f and shunt resistances 35u, 35v, and 35w are connected to control circuit 30 through level shift circuit 36, respectively. Windings 11u to 11w of motor 11 carry maximum current flow of 15A and thus, shunt resistances 35u to 35w are set at 0.1 Ω, for example.

Level shift circuit 36 includes components such as operational amplifiers to amplify the terminal voltages of shunt resistances 35u to 35w and biases the range of output of the amplified signal so that it stays in the positive side (as in 0 to +3.3V). Overcurrent comparator circuit 38 detects overcurrent to prevent circuit breakdown when the upper or the lower arm of inverter circuit 32 is short circuited.
Inverter circuit 32 has drive power supply circuit 39 connected to its input side and drive power supply circuit 39 supplies AC power supply 40 of 100V to inverter circuit 32 after converting it into DC voltage of approximately 280V through voltage doubling rectification carried out by full-wave rectifier circuit 41 configured by a diode bridge and a couple of series connected capacitors (electrolytic capacitors) 42a and 42b. Each of the phase output terminals of inverter circuit 32 is connected to one of phase windings 11u, 11v, and 11w of motor 11.

Between one end of AC power supply 40 and one side of an AC input terminal of full-wave rectifier circuit 41, relay 47 is interposed. Between the AC input terminals, photocoupler (PC, input status detector) 48 is connected by way of resistor elements 59a and 59b. A normally opened power supply switch 49 is connected in parallel to relay 47. When power supply switch 49 is turned ON by the user and thereafter turned OFF by momentary action, both ends of relay 47 is shorted to supply initial power supply to control circuit 30. Then, control circuit 30 conducts a coil not shown and closes relay 47 to maintain the power supply from thereonafter. Control circuit 30 refers the output signal (frequency 50 Hz/60 Hz) of photocoupler 48 corresponding to the AC power supply frequency to determine whether or not AC power 40 is inputted.

Control circuit 30 detects current values Iau to Iaw flowing in windings 11u to 11w of motor 11 obtained through level shift circuit 36 and based on the detected current values, control circuit 30 produces estimate phase θ and estimate rotational angular speed ω of revolving magnetic field of the secondary side and obtains excitation current component Id and torque current component Iq by orthogonal coordinate transformation and d-q (direct-quadrature) coordinate transformation of the three phase current values.
Then, control circuit 30, when receiving a speed command from external components, produces current command Idref and current command Iqref based on estimate phase θ, estimate rotational angular speed ω, and current components Id and Iq. Then current command Idref and current command Iqref are converted into voltage commands Vd and Vq which are thereafter subjected to orthogonal coordinate transformation and three phase coordinate transformation. Finally, drive signal is produced as PWM signal to be outputted to windings 11u to 11w of motor 11 through inverter circuit 32.

Drive power supply of approximately 280V supplied to inverter circuit 32 is stepped down by first power supply circuit 43 to produce a control power supply of 15V which is fed to control circuit 30 and drive circuit 44. The 15V power supply generated by the first power supply circuit 43 is utilized by power supply circuit 45, which is configured as a three-terminal regulator, as source for generating 3.3V power supply which is thereafter fed to control circuit 30. IGBTs 33a to 33c at the upper arm of inverter circuit 32 are driven by high-voltage driver circuit 46.

Motor 11 has rotational position sensor 51 (u, v, w), which is used during startup and configured by a Hall IC etc. , disposed at its rotor and the position signals of the rotor outputted by rotational position sensor 51 (position detecting element) is given to control circuit 30. That is, during startup of motor 11, vector control is executed using rotational position sensor 51 until sufficient rotational speed (30 rpm, for example) is reached that would allow estimation of rotor position, and after reaching such rotational speed, sensorless vector control is executed without using rotational position sensor 51.

Though not shown in detail, compressor motor is configured to be nearly symmetrical to the drive system of motor 11.
Power supply circuit 39 has a series circuit composed of resistor elements 52a and 52b provided between its output terminal and ground. Common connection point of resistor elements 52a and 52b are connected to the input terminal of control circuit 30. Control circuit 30 reads the incoming input voltages from inverter circuit 32 which have been divided by resistor elements 52a and 52b, and utilizes the read voltage as a reference for determining the PWM signal duty.

Series circuit comprising diode 80, resistor elements 54a and 54b (induced voltage detector) is connected between the W phase output terminal of inverter circuit 32 and ground and capacitor (induced voltage detector) 55 is connected in parallel to resistor element 54b. Common connection point of resistor elements 54a and 54b is connected to the input terminal of control circuit 30, which control circuit 30 detects the induced voltage produced at winding 11W when motor 11 is idly rotated.
Other responsibilities of control circuit 30 include control of electric components 56 such as a door lock control circuit and dry fan motor and exchanging inputs/outputs of operation signals and control signals, etc. with display/operation circuit board 57. Control circuit 30 further controls door lock actuator 58 that locks or unlocks door 9 depending upon the progress of the wash operation.

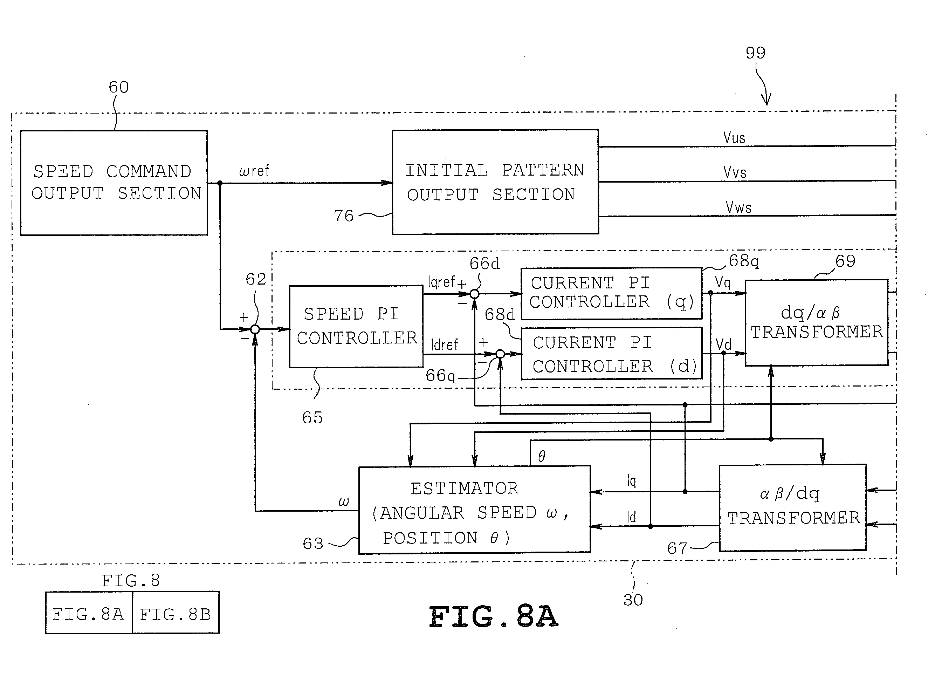

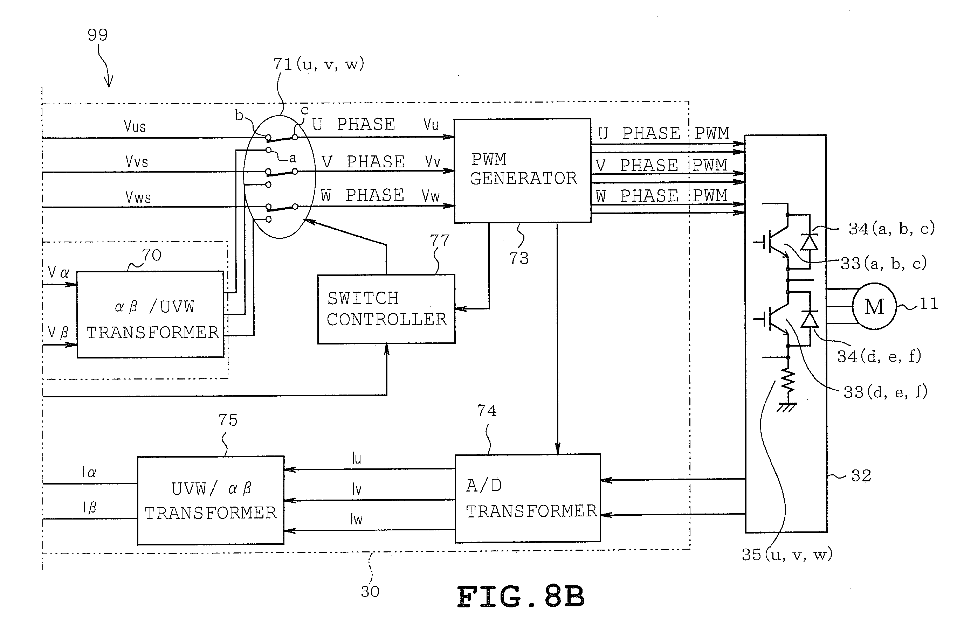

FIGS.8A and 8B taken together provide a functional block diagram of sensorless vector control executed on motor 11 (and compressor motor) by control circuit 30. The illustrated configuration is similar to those disclosed in, for instance, JP-2003-181187 A and will only be briefly described. In FIGS.8A and 8B, (α, β) represent an orthogonal coordinate system which is the result of orthogonal transformation of three phase (UVW) coordinate system, corresponding to each phase of motor 11, mutually displaced by 120 degrees in electric angle, whereas (d, q) represents a coordinate system of secondary magnetic flux that rotates with the rotor rotation of motor 11.

Target speed command ωref outputted by speed output section 60 is given to subtractor 62 as a minuend, whereas speed estimate ω of motor 11 estimated by estimator 63 is given to subtractor 62 as the subtrahend. The difference produced by subtractor 62 is given to speed PI (Proportional Integral) controller 65. Speed PI controller 65 performs PI control based on the difference of target speed command ωref and speed estimate ω to produce q-axis current command Iqref and d-axis current command Idref. Command Iqref and Idref are given to subtractors 66q and 66d as minuends and q-axis current Iq and d-axis current Id outputted from αβ/dq transformer 67 are given as subtrahends. The difference produced by subtractors 66q and 66d are respectively given to current PI controllers 68q and 68d, respectively. The control period at speed PI controller 65 is set at 1 m second.

Current PI controllers 68q and 68d perform PI control based on the difference between q-axis current comand Iqref and d-axis current command Idref to generate q-axis voltage command Vq and d-axis voltage command Vd which are outputted to dq/αβ transformer 69. Rotational phase angle (rotor position angle) θ of secondary magnetic flux estimated by estimator 63 is given to dq/αβ transformer 69, and dq/αβ transformer 69 in turn converts voltage commands Vd and Vq into voltage commands Vα and Vβ based on rotational phase angle θ.

Voltage commands Vα and Vβ are converted into three-phase voltage commands Vu, Vv, and Vw by αβ/UVW transformer 70 and thereafter outputted to be given to one side of the stationary connection points 71ua, 71va, and 71wa of switches 71u, 71v, and 71w, whereas the stationary connection points 71ub, 71vb, and 71wb in the remaining other side are provided with voltage commands Vus, Vvs, and Vws outputted from initial pattern output section 76. Movable connection points 71uc, 71vc, and 71wc of switches 71u, 71v, and 71w are connected to the input terminal of PWM generator 73.

PWM generator 73 outputs PWM signals Vup (+,-), Vvp (+,-), and Vwp (+,-) representing each phase to inverter circuit 32, which were obtained by modulating a 15. 6 kHz carrier (triangular wave) based on voltage commands Vus, Vvs, and Vws or Vu, Vv, and Vw. PWM signals Vup to Vwp are outputted, for instance, as signals having pulse widths that correspond to sinusoidal-based voltage amplitude such that a sinusoidal current is conducted through each of phase windings 11u, 11v, and 11w of motor 11.

A/D converter 74 outputs A/D converted current data Iau, Iav, and Iaw occurring at IGBTs 33d to 33f to UVW/αβ transformer 75. UVW/αβ transformer 75 transforms three phase current data Iau, Iav, and Iaw into dual axis current data Iα and Iβ of orthogonal coordinate system according to a predetermined formula. The dual axis current data Iα and Iβ are outputted to αβ/dq transformer 67.

Estimator 63 produces estimate position angle θ and estimate rotational speed ω of rotor of motor 11 based on q-axis voltage command Vq, d-axis voltage command Vd, q-axis current Iq, and d-axis current Id and outputs the estimates to the required components. During startup, motor 11, being applied with startup pattern by initial pattern output section 76, is forcibly commutated. Then, after vector control has been initiated based on sensor signals of rotational position sensor 51, estimator 63 is started 8 to proceed to sensorless vector control in which obtains estimates of position angle θ and rotational speed ω of rotor of motor 11. In the case of compressor motor, transition is made to sensorless.

Switch controller 77 controls the switching performed at switches 71 based on duty information of a PWM signal given by PWM generator 73. The above described configurations implemented as software at control circuit 30 with the exception of inverter circuit 32 have been represented as a block diagram. Current control period in the vector control is set at 128 µ seconds. PWM carrier wave period is 64µ seconds at motor 11 and 128µ seconds at compressor motor. Control circuit 30 and inverter circuit 32 constitute inverter device 99.

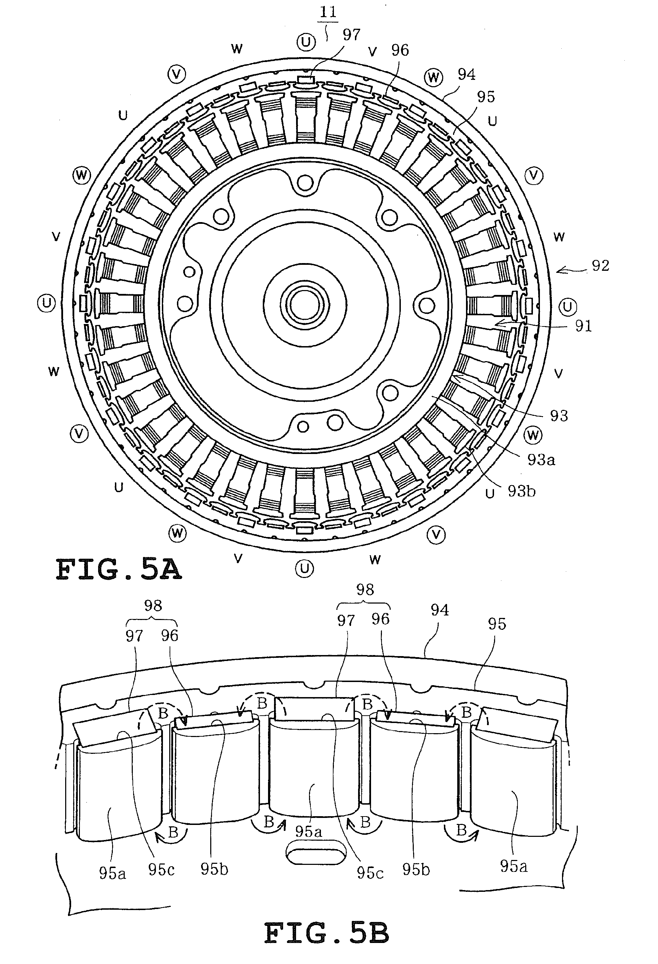

FIG.5A provides a plan view that schematically illustrates the overall configuration of a motor 11, whereas FIG.5B provides a partially enlarged perspective view. Motor 11 includes stator 91 and rotor 92 provided at the outer periphery of stator 91. Stator 91 comprises stator core 93 and stator windings 11u, 11v, and 11w. Stator core 93 is made of annular yoke 93a and a multiplicity of teeth 93b extending radially from the outer periphery of yoke 93a and stator windings 11u, 11v, and 11w are wound on teeth 93b.

Rotor 92 is integrally structured by frame 94, rotor core 95, and a plurality of permanent magnets 96 and 97 molded together by a mold resin not shown. Frame 94 is made of magnetic material such as a steel sheet pressed into a form of a flat bottom cylinder. Permanent magnets 96 and 97 constitute rotor magnet 98.
Rotor core 95 is disposed on the inner periphery of frame 94 and the inner peripheral surface of rotor core 95 which confronts the outer peripheral surface is contoured by a plurality of protrusions 95a protruding inward and in arch shape. Protrusions 95a have rectangular insert holes 95b and 95c defined in them that differ in the widths of their shorter sides and that run in the axial direction so as to penetrate protrusions 95a. Insert holes 95b and 95c are disposed alternately in an annular arrangement. Each of insert holes 95b and 95c have neodymium magnet 96 (a first permanent magnet) and alnico magnet 97 (a second permanent magnet) inserted in them, respectively. The coercivity of neodymium magnet 96 is approximately 900kA/m which is as much as nine times the coercivity of alnico magnet 97 which is approximately 100 kA/m.

Further, the two types of permanent magnets 96 and 97 each represent a single magnetic pole and are each disposed so that their direction of magnetism is oriented along the radial direction of motor 11. Both permanent magnets 96 and 97 are provided in a set of 24 magnets to amount to a total of 48 magnets. Because the two types of permanent magnets 96 and 97 are disposed alternately and oriented such that their direction of magnetism are oriented along the radial direction, the magnetic poles of the permanent magnets 96 and 97 disposed adjacent to the other reside in opposite directions (meaning that the north pole of either of the magnet types resides in the inner side whereas the north pole of the remaining other magnet type resides in the outer side), a path of magnetism (magnetic flux) is produced between neodymium magnets 96 and alnico magnets 97 in the direction, for example, indicated by arrow B. This means that magnetic path is formed so as to pass through both neodymium magnets 96 having relatively greater coercivity and alnico magnets 97 having relatively less coercivity.

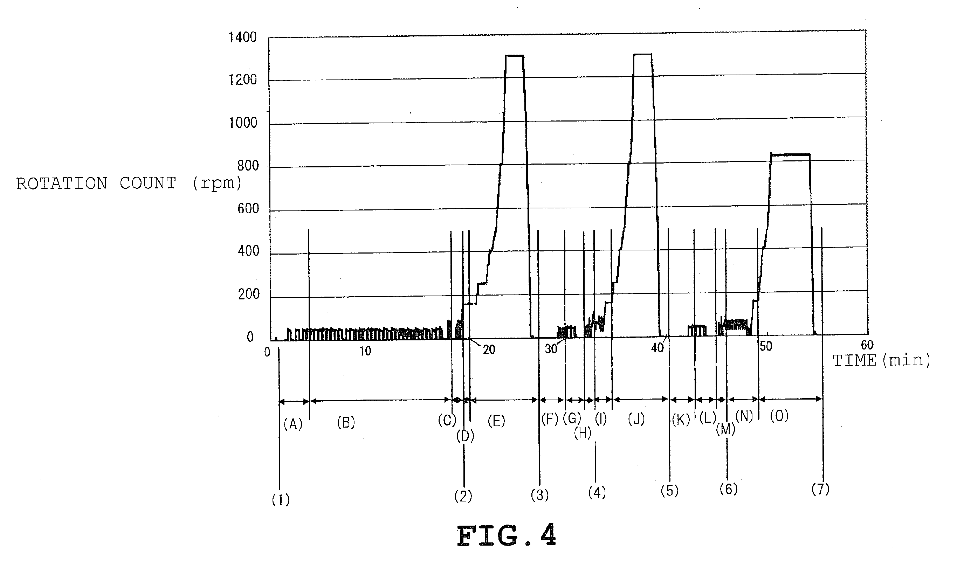

Next, working of the present embodiment will be described with reference to FIGS.1 to 4. FIG.4 indicates full automatic operation of a general washing machine and the horizontal axis represents the elapsed time (minutes) and the vertical axis represents the count of rotation (rpm) of motor 11. The above described machine configuration assumes a washer dryer configuration; however, the dry operation will not be explained for simplicity. Reference symbols (A) to (O) of FIG.4 indicate the operational steps as follows such that: (A) represents water supply/agitation step; (B), a wash step; (C), a draining step; (D), a balancing (1) step; (E), rinse/dehydrate (1) step; (F), a water supply step; (G), a rinse/agitate step; (H), a draining step; (I), a balancing (2) step; (J), a rinse dehydrate (2) step; (K), a water supply step; (L), a rinse/agitate (2) step; (M), a draining step; (N), a balancing step; and (O) a final dehydrate step. Reference symbols (1) to (7) of FIG.4 indicate the timing of magnetization/demagnetization of motor 11 as follows such that: (1) represents magnetization; (2), a large demagnetization; (3), a magnetization; (4), a large demagnetization; (5), a magnetization; (6), a small demagnetization; and (7), a magnetization.

Among the steps shown, the steps that involve drastic variation in rotation count of motor 11 are: (B) wash step, (E) rinse/dehydrate (1) step, (G) rinse/agitate (1) step, (J) rinse/dehydrate (2) step, (L) rinse/agitate (2) step, and (O) final dehydrate step. Maximum rotation count of drum 11 is around 50 rpm in steps (B), (G), and (L); around 1300 rpm in steps (E) and (J); and around 850 rpm in step (O). Output torque of motor 11 is around 280 kgf.cm in steps (B), (G), and (L); and around 20 to 30 kgf.cm in steps (E) and (J). Thus, steps (B), (G), and (L) operate under low-speed rotation/high-output torque, whereas steps (E) and (J) operate under high-speed rotation/low-output torque.

When the washer dryer executes the so called "preheat dehydration" in which laundry inside drum 4 is dehydrated while being heated, motor 11 is controlled as in rinse/dehydrate steps (E) and (J).
In conventional washing machines, further escalation in rotation count was achieved when running under high-speed rotation /low-output torque by executing a field weakening control. As opposed to this, the present embodiment dynamically varies magnetic flux of rotor magnet 98 by varying the amount of magnetism of alnico magnet 97 constituting rotor 92 of motor 11 to adapt the properties of motor 11 to the properties required in given operations of the washing machine. More specifically, the magnetic flux of rotor magnet 98 in its entirety is increased to increase the amount of magnetism (magnetize) of alnico magnet 97 when motor 11 needs to run under low-speed rotation/high-output torque in operations such as wash/rinse operation. The magnetic flux of rotor magnet 98 in its entirety is decreased to decrease the amount of magnetism (demagnetize) of alnico magnet 97 when motor 11 needs to run under high-speed rotation/low-output torque in operations such as dehydrate operation.

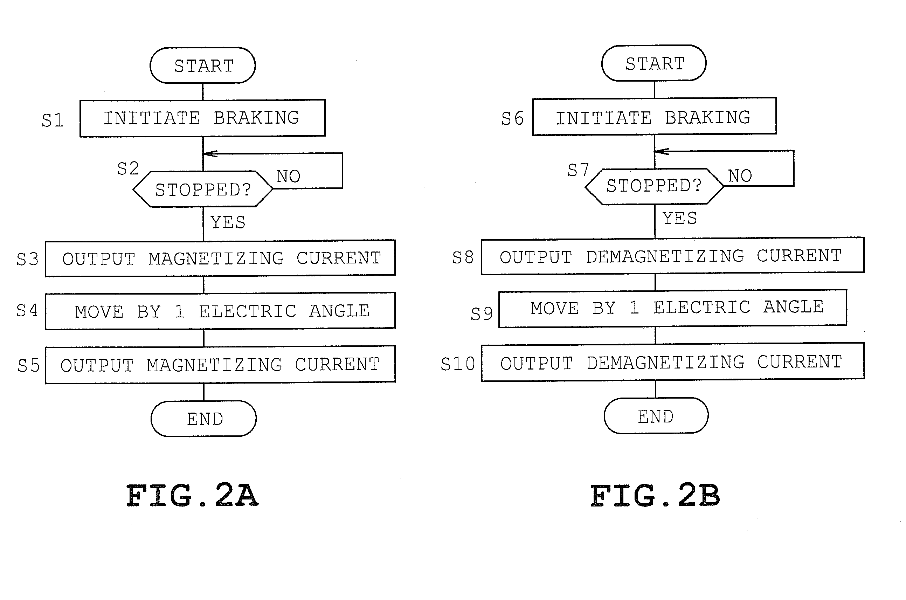

A description will be given hereinunder on the process of varying the amount of magnetism of alnico magnet 97. FIG.2A is a flowchart indicating the process flow for magnetizing a demagnetized alnico magnet 97 when proceeding from the dehydrate operation to the wash/rinse operation. Braking is started (step S1) to stop the rotation of drum 4/motor 11 in the ongoing dehydrate operation, and when stopped (step S2: YES), d-axis current is outputted to magnetize alnico magnet 97 (step S3). The applied d-axis current causes the rotational position of rotor 92 to be fixed. From such state, conduction phase is switched (step S4) to move rotor 92 by 1 electric angle (1/24 of machine angle) and d-axis current is outputted again thereafter (step S5) to complete the process flow.

As can be seen in FIG.5A, alnico magnet 97 has U,V, and W phases aligned repeatedly in the listed sequence in the clockwise direction, and when rotor 92 is located based on the topmost U-phase, for example, every other alnico magnet 97 confronts teeth 93b of stator 91 at phases U,W,V,U,W,V.... Thus, at step S3, every other alnico magnet 97 is magnetized, rendering the magnetization of other half of the magnets incomplete. Thus, at step S4, after rotor 92 travels by 1 electric angle, the remaining alnico magnets 97 can be magnetized to a sufficient level.

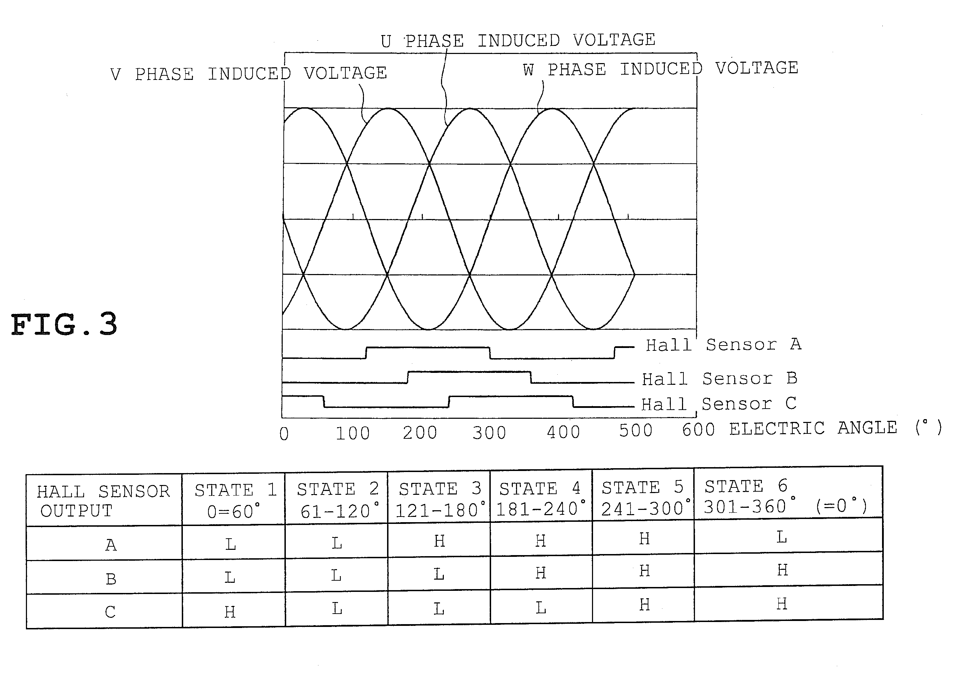

Further, at step S3, before executing the first set of magnetization through generation of d-axis current, the position of the stopped rotor 92 is sensed by rotational position senor 51 and conduction phase is determined based on the stopped position. As shown in FIG.3, output levels of signals A, B, and C produced by rotational position sensors (Hall sensors) 51u, 51v, and 51w takes 6 different states at each of the 60-degree electric angle intervals depending upon the position of rotor 92. Thus, by giving d-axis current at conduction phases corresponding to the output levels of sensor signals A, B, and C and fixing the position of rotor 92 at 30, 90, 150... degrees, the amount of rotary movement of rotor 92 can be reduced to suppress noise emission. Because the washing machine is generally installed indoors, noise reduction is a significantly important requirement.

FIG.2B is a flowchart indicating the process flow of demagnetization upon transition to the dehydrate operation from the wash/rinse operation carried out under the magnetized state. The steps of the process flow are basically the same as those of flowchart indicated in FIG.2A except that steps S8 and S10 corresponding to steps S3 and S5 are labeled "OUTPUT DEMAGNETIZING CURRENT".

FIG.1 is a flowchart of a process executed by control circuit 30 when terminating the operation of the washing machine after the final dehydrate step indicated by (O) in FIG.4 has been completed. Control circuit 30, when completing (O) final dehydrate step (step S11), executes the magnetization process indicated in FIG.2A (corresponding to step S12 and magnetization (7) indicated in FIG.4). Then the lock of door 9 is cancelled (unlocked) by door lock actuator 58 and outputs a control signal to display/control panel 57 (step S13) to report the end of operation. Thereafter, relay 47 is opened to shutoff the power supply to obtain an opereation terminated state.

According to the above described present embodiment, the present embodiment motor 11 is configured by rotor magnets 98 including alnico magnets 97 having a level of coercivity that allows the amount of magnetism to be easily varied. In varying the amount of magnetism of alnico magnets 97, control circuit 30 produces excitation current through inverter circuit 32. Control circuit 30, when stopping the operation of the washing machine, places alnico magnets 97 in a magnetized state in which the amount of magnetism is relatively increased. Hence, the next time the washing machine starts its operation, alnico magnets 97 are in magnetized state and thus, is given enough torque needed for starting motor 11 to improve the reliability of the washing machine.

Further, when the washing machine terminates its operation after execution of a dry step, the rotation count set to motor 11 in the final phase of the dry step is as low as 100 rpm and thus, motor 11 stops running in the magnetized state.
From hereinafter, increasing/decreasing the magnetic flux of rotor magnet 98 through increasing/decreasing of the amount of magnetism of alnico magnets 97 will be referred to as magnetization/demagnetization of motor 11.

### (Second Embodiment)

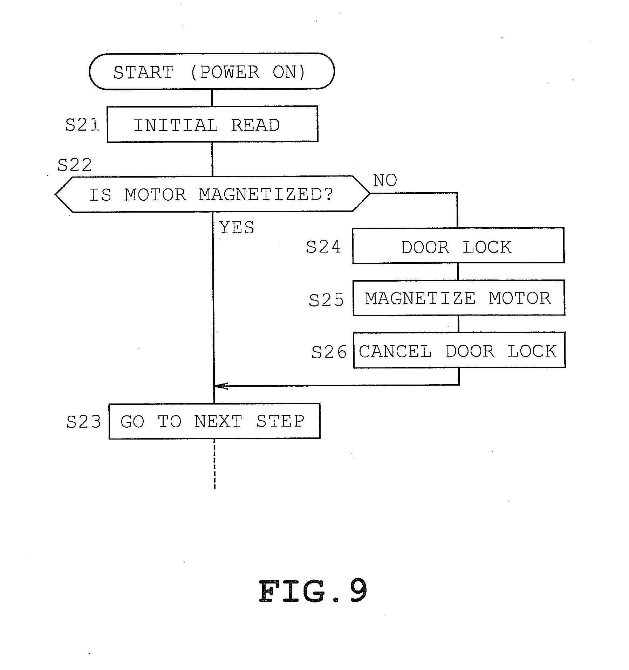

FIG.9 illustrates a second embodiment and portions identical to those of the first embodiment are represented by identical reference symbols and are not re-described. The differences from the first embodiment are described hereinafter. FIG.9 indicates a flowchart of a process executed when power is supplied through the user operation of the "ON" switch provided on control panel 29. Immediately after the supply of power, control circuit 30 checks the state of magnetism of rotor magnet 98 of motor 11 (initial read, step S21)

Control circuit 30 writes a flag indicative of the progress status to an internal nonvolatile memory whenever a step is completed in order to store how far the series of steps indicated in FIG.4 has been completed. Accordingly, the state of magnetism of rotor magnets 98 can be checked by referencing the flag. For instance, in the first embodiment, if the operation is terminated normally with the magnetization process of motor 11 after the final dehydrate step has been completed (step S22: YES) the process proceeds to the next step (step S23).
That is, in this case, large output torque for staring motor 11 can be obtained which is needed for a subsequent sensing process for sensing the weight of laundry or a wash step, allowing the process to flow smoothly to the next step.

In case step S22 indicates a demagnetization of motor 11 (NO), control circuit 30 temporarily locks door 9 (step S24). Then, after magnetization (step S25), door 9 is unlocked (step S26) and the process proceeds to step S27. Door 9 is locked when executing step S25 to prevent laundry from being loaded into drum 4 or prevent the user from putting his/her arm or hand into drum before the magnetization process is executed.

According to the above described second embodiment, control circuit 30 increases the magnetization of motor 11 immediately after power is supplied to the washing machine. Thus, enough torque required for starting motor 11 can be obtained even if the previous operation of the washing machine is interrupted or terminated with motor 11 placed in a demagnetized state. Thus, the reliability the washing machine can be improved.

### (Third Embodiment)

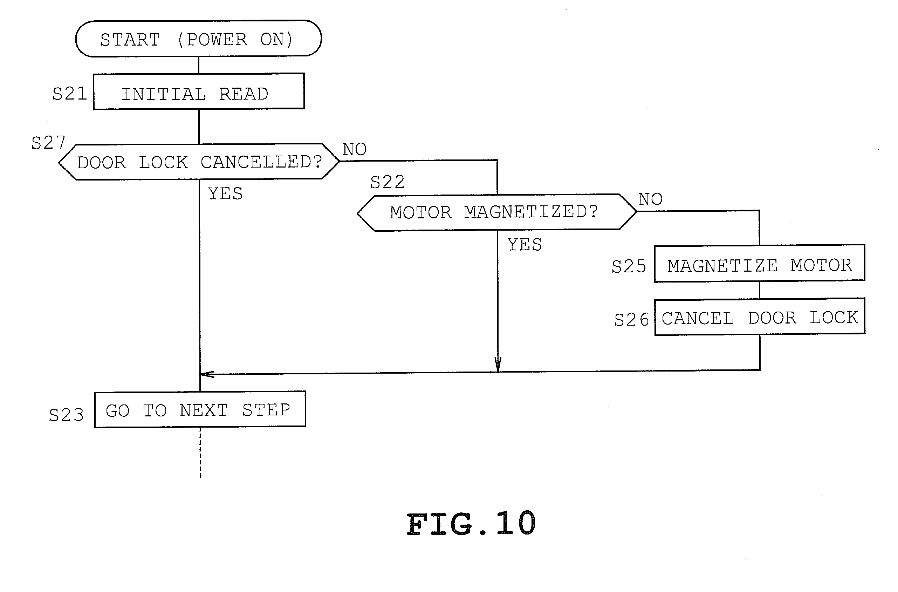

FIG.10 illustrates a third embodiment and indicates the process in which power is supplied as was the case in the second embodiment. Step S22 of the second embodiment is replaced by step S27 in which a judgment "Door lock cancelled?" is made. That is, as the result of initial read in step S21, if door 9 is unlocked (step S27: YES), the process proceeds to the next step (step S23).

On the other hand, if door 9 is locked (step S27: NO), the previous operation may have been terminated without going through proper procedures described in the first embodiment. For instance, the operation may have been terminated by irregularities such as power failure and disconnection of power plug. In such case, the process proceeds to step S22 to check the state of magnetism of motor 11 based upon which the steps S25 and S26 are executed as was the case in the second embodiment.

According to the above described third embodiment, control circuit 30 increases the magnetism of motor 11 when door 9 is locked immediately after power is supplied to the washing machine. Thus, enough torque can be obtained to start motor 11 even if the operation of the washing machine is interrupted or stopped with motor 11 in demagnetized state. Thus, improvement in the reliability of the washing machine can be achieved as was the case in the second embodiment.

### (Fourth Embodiment)

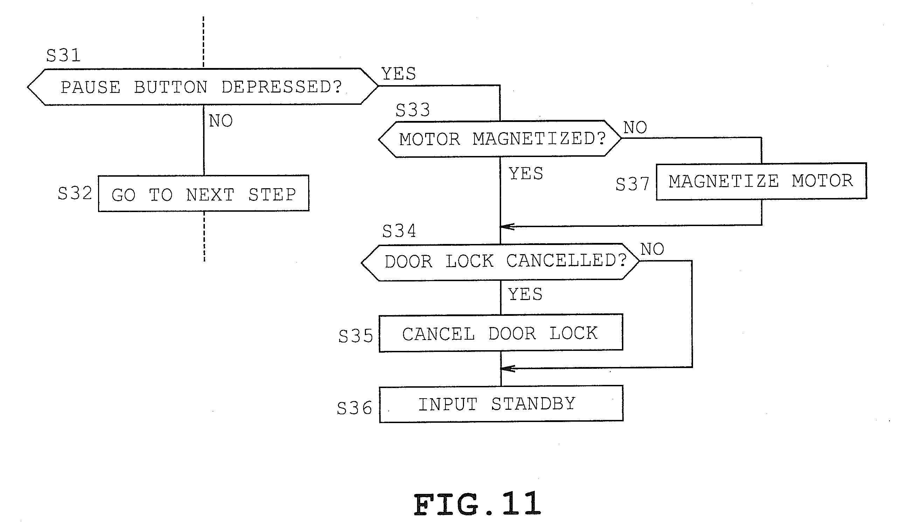

FIG.11 illustrates a fourth embodiment. The fourth embodiment indicates the process executed in response the user operation of the pause button (the pause button and the start button may be implemented by a single button) during the ongoing operation of the washing machine. In case the pause button is turned ON (step S31: YES), control circuit 30 determines whether or not motor 11 is in the magnetized state (step S33) as was the case in steps S21 and 22 in the second embodiment.

In case motor 11 is in the magnetized state (YES) at step S33, the operational status at that point in time is checked, for instance, by checking the water level within drum 4 to determine whether or not door 9 can be unlocked (step S34). If unlockable (step S34: YES), door 9 is unlocked (step S35) and the system stands by for user input (cancellation of pause) (step S36). If door 9 is not unlockable at step S34 (NO), the process proceeds to step S36.

In case motor 11 is in a demagnetized state (NO) at step S33, the process proceeds to step S34 after magnetization process is executed (step S37). That is, when the washing machine is temporary paused, the rotation of motor 11 is stopped if in rotation and thus, if the pause is cancelled by user input motor 11 is restarted from the paused state. At this instance, startup torque is likely to be insufficient if rotor magnet 98 is demagnetized and thus, a magnetization process is carried out before proceeding to the input standby state at step S36.
According to the above described fourth embodiment, control circuit 30 increases the magnetism of motor 11 in case the user turns ON the pause button, which is an input operation for interrupting the ongoing operation, while motor 11 is in a demagnetized state. Thus, enough torque can be obtained when motor is restarted by canceling the paused state.

### (Fifth Embodiment)

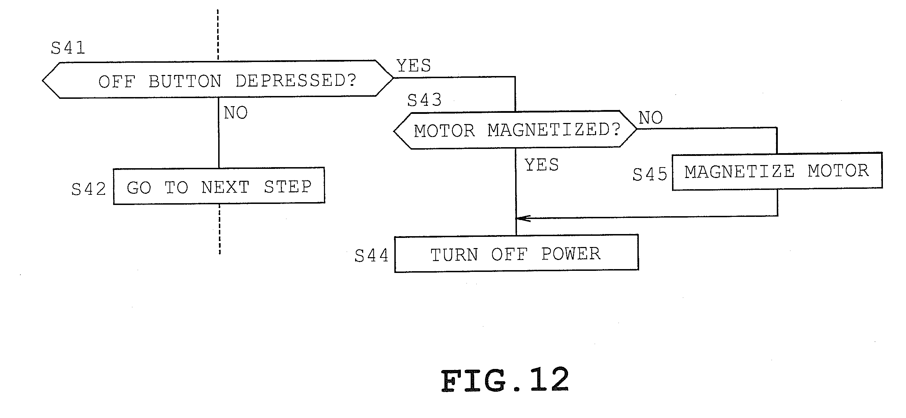

FIG.12 illustrates the fifth embodiment. The fifth embodiment involves a process executed when the user turns ON a button (power OFF button) that instructs "shutting off" of power during the ongoing operation of the washing machine. In case the power off button is turned ON (step S41: YES), control circuit 30 opens relay 47 to shutoff AC power supply 40. The rest of the process is executed using the power charged in capacitor 42.

Then, controller 30 determines whether or not motor 11 is in a magnetized state (step S43) as was the case in step S33 in the fourth embodiment and if found to be in the magnetized state (YES), the process proceeds to shut down the power supply (step S44) without any special procedures. In case motor 11 is found to be in a demagnetized state (NO) at step S43, the process proceeds to step S44 after executing a magnetizing process (step S45).
In case the operation of the washing machine is stopped and thereafter restarted, motor 11 is restarted from the stopped state. At this instance, startup torque is likely to be insufficient if rotor magnet 98 is in a demagnetized state, and thus, the magnetization process is executed to alleviate such insufficiency.

According to the above described fifth embodiment, control circuit 30 increases the magnetism of motor 11 when power off button is turned ON by user operation, which is an input operation for shutting off power supply, while motor 11 is in a demagnetized state. Thus, enough torque can be obtained for starting up motor 11 in starting the next operation. Control circuit 30 may be configured such that relay 47 is not opened when a "YES" decision is made at step S41 but instead may be opened after a "YES" decision is made at step S43 or after step S45 is executed.

### (Sixth Embodiment)

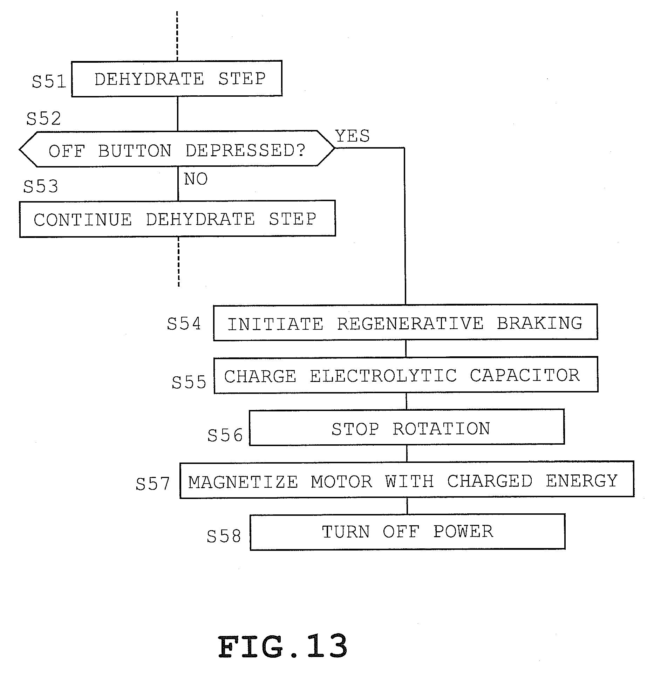

FIG.13 illustrates a sixth embodiment. The sixth embodiment involves a process executed when the power OFF button is turned ON by the user when the washing machine is undergoing a dehydrate operation. In case the power OFF button is turned ON (step S52: YES) during the dehydrate operation (step S51), control circuit 30 shuts off AC power supply 40 by opening relay 47. The rest of the process is executed using the power charged in capacitor 42 as was the case in the fifth embodiment.

Then, control circuit (motor controller) 30 turns OFF all of IGBT 33 of inverter circuit (motor controller) 32 to initiate regenerative braking (step S54). In the dehydrate step, motor 11 is demagnetized as indicated in FIG.4 and rotates at a relatively fast speed of approximately 1300 rpm or 850 rpm. Thus, a large regenerative power occurs by regenerative braking and the power is charged to capacitor 42 through fly wheel diode 34. When the rotation of motor 11 is stopped by regenerative braking (step S56), control circuit 30 utilizes the charged power to magnetize motor 11 (step S57) and proceeds to a state in which power supply is shut off (step S58).

According to the above described sixth embodiment, when power OFF button is turned ON by the user while motor 11 is in high-speed rotation in the demagnetized state during the dehydrate step, controller 30 applies regenerative braking on motor 11 and utilizes the resulting regenerative power to magnetize motor 11 to thereby suppress power consumption.

### (Seventh Embodiment)

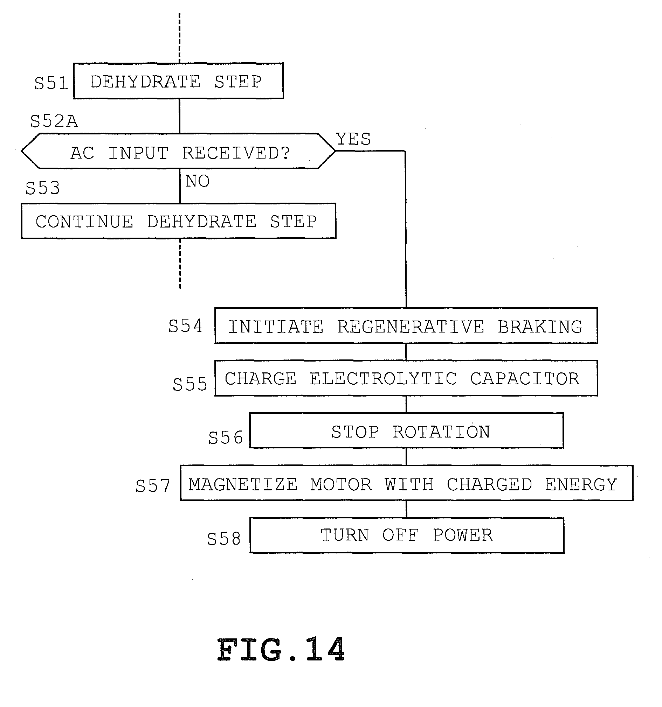

FIG.14 illustrates a seventh embodiment and the difference from the sixth embodiment will be described hereinafter. The seventh embodiment differs from the sixth embodiment in that, step S52 of the sixth embodiment is replaced by step S52A that determines "AC INPUT RECEIVED?". Control circuit 30 refers the pulse signal representing the frequency of the AC power supply outputted by photocoupler (input status detector) 48 and if the pulse signal is being outputted continuously, a "YES" judgment is made against "AC INPUT RECEIVED?".

In case the pulse signal is not outputted for, for instance, three consecutive cycles, a "NO" judgment is made against "AC input received?" at step S52A. In such case, steps S54 to S58 are executed as was the case in the sixth embodiment. A "NO" decision made against "AC INPUT RECEIVED?" may originate from cases such as sustained or instantaneous power failure of commercial AC power supply 40, a fuse disconnection or breaker tripping in the household wiring, and disconnection of the washing machine power plug.
According to the above described seventh embodiment, in case control circuit 30 makes a "NO" decision against "AC INPUT RECEIVED?" based on the output signal of photocoupler 48 when motor 11 is high-peed rotation with motor 11 placed in demagnetized state during the dehydrate step, control circuit 30 applies regenerative braking on motor 11 and utilizes the regenerative power to magnetize motor 11. Thus, power consumption can be suppressed as was the case in the sixth embodiment.

### (Eighth Embodiment)

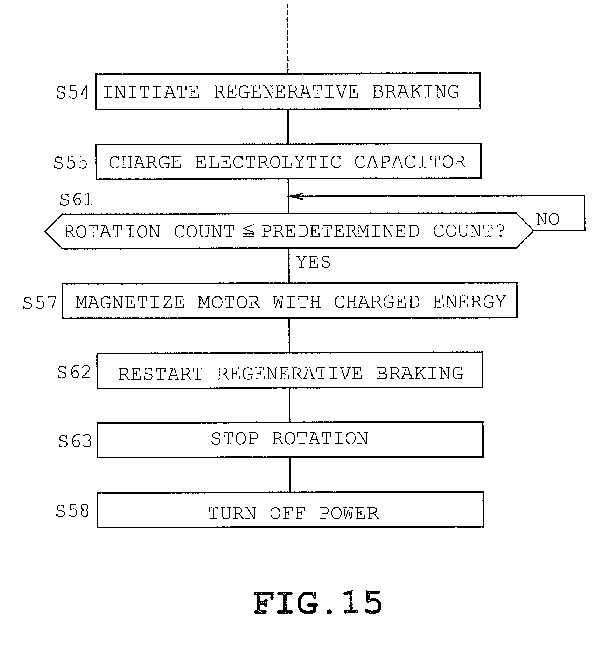

FIG.15 illustrates an eight embodiment and differences from the sixth and the seventh embodiments will be described hereinafter. In the eight embodiment, regenerative braking is applied for stopping the rotation of motor 11 during the dehydrate step as was the case in the sixth and the seventh embodiments, and when the count of rotation of motor 11 is reduced to a predetermined threshold or lower (step S61: YES), magnetization process is executed (step S57). The rotation count of motor 11 is detected based on the variation cycle of a position signal outputted by rotational position sensor (rotation count detector) 51. After executing the magnetization process, regenerative braking is restarted (step S58) and continued until the rotation of motor 11 is stopped (step S63).

According to the eighth embodiment, control circuit 30 increases the magnetism of motor 11 when the count of rotation of motor 11 detected by rotational position sensor 11 is reduced to a predetermined threshold by the application of regenerative braking. That is, because the magnetization process is executed by selectively avoiding the period when a large counter electromotive force is exerted on windings 11u to 11w of motor 11, breakdown of inverter circuit 32 can be prevented while optimizing the use of regenerative power to suppress power consumption.

### (Ninth Embodiment)

In a ninth embodiment, a magnetizing process is executed prior to, for instance, demagnetizing process (6) executed before starting final dehydrate step (O) in the step chart of FIG.4. That is, the process indicated in FIG.2A is executed prior to the process indicated in FIG.2B. Accurate control in the amount of demagnetization of arnico magnet 97 is relatively difficult. However, it is relatively easy to saturate the amount of magnetism. Thus, the amount of demagnetization can be accurately controlled if demagnetization is executed based on the maximum amount of magnetization.

The present invention is not limited to the above described or shown embodiments but may be modified or expanded as follows.
The amount of magnetism of motor 1 may be determined by detecting the level of induced voltage occurring when motor 11 is rotated by a constant rotation count and evaluating the size of the detected induced voltage level. The induced voltage may be obtained by calculation based on the voltage/current equation of the motor carried out within estimator 63
The first and the second permanent magnets are not limited to a neodymium magnet and an arnico magnet but may be replaced by other magnetic materials that satisfy the coercivity requirements.
In case the variation in the amount of magnetism of the second permanent magnet alone is sufficient to fulfill all of the operational requirements, the first permanent magnet need not be provided.

### The embodiments may be combined with one another.

The rotation shaft of drum 4 may be inclined in elevation by 10 to 15 degrees from a horizontal plane.
In the second embodiment, steps 21 and 22 may be removed and execution of steps S24 to S26 may be made mandatory when power is supplied. Likewise, in the third embodiment, execution of steps S25 and S26 may be made mandatory when a "NO" decision is made at step S27.
Further, in the fourth embodiment, step S37 may be executed when a "YES" decision is made at step S31. Still further in the fifth embodiment, step S45 may be executed when a "YES" decision is made at step S41.

In the seventh embodiment, presence/absence of AC input need not be determined through verification of continuous output of AC power supply for three consecutive periods.
Input status detector may be configured by other elements such as a current transformer.
The present invention may be applied to a washing machine without a dry feature. The present invention may be applied to a vertical washing machine that agitates water flow by a pulsator.

### INDUSTRIAL APPLICABILITY

As described above, the washing machine according to the present invention is applicable to applications in which high torque output is required during a wash operation and high-speed rotation is required during dehydrate operation.

## Claims

1. A washing machine comprising:
a permanent magnet motor (11) that includes a rotor (92) and that drives rotation for execution of a wash operation;
a permanent magnet (97) that is provided on the rotor side and that has a level of coercivity allowing variation in an amount of magnetism with ease, and
a magnetism controller (30, 32) that produces an excitation current to vary the amount of magnetism of the permanent magnet (97);
wherein the magnetism controller (30, 32), when interrupting or stopping an ongoing operation, interrupts or stops the ongoing operation after magnetizing the permanent magnet (97).

2. A washing machine comprising:
a permanent magnet motor (11) that includes a rotor (92) and that drives rotation for execution of a wash operation;
a permanent magnet (97) that is provided on the rotor side and that has a level of coercivity allowing variation in an amount of magnetism with ease, and
a magnetism controller (30, 32) that produces an excitation current to vary the amount of magnetism of the permanent magnet (97);
wherein the magnetism controller (30, 32) magnetizes the permanent magnet (97) immediately after supply of power.

3. The washing machine according to claim 2, wherein the magnetism controller (30, 32) magnetizes the permanent magnet (97) immediately after supply of power provided that a door (9) that opens or closes a rotary tub (4) is locked.

4. The washing machine according to any one of claims 1 to 3, wherein the magnetism controller (30, 32) magnetizes the permanent magnet (97) provided that an input operation for interrupting the ongoing operation is made by a user while the permanent magnet (97) is in a demagnetized state.

5. The washing machine according to any one of claims 1 to 3, wherein the magnetism controller (30, 32) magnetizes the permanent magnet (97) provided that an input operation for shutting off power is made by a user while the permanent magnet (97) is in a demagnetized state.

6. The washing machine according to any one of claims 1 to 3, further comprising a motor controller (30, 32) that applies a regenerative braking on the permanent magnet motor (11) provided that an input operation for shutting off power is made by a user while the permanent magnet motor (11) is rotating at high speed with the permanent magnet (97) in a demagnetized state, wherein the magnetism controller (30, 32) magnetizes the permanent magnet (97) by utilizing a regenerative power generated by the regenerative braking.

7. The washing machine according to any one of claims 1 to 3, further comprising an input status detector (48) that detects an input status of a commercial alternating current power supply, and a motor controller (30, 32) that applies a regenerative braking on the permanent magnet motor (11) provided that an input of the commercial alternating current power supply (40) ceases to be detected by the input status detector (48) while the permanent magnet motor (11) is rotating at high speed with the permanent magnet (97) in a demagnetized state, wherein the magnetism controller (30, 32) magnetizes the permanent magnet (97) by utilizing a regenerative power generated by the regenerative braking.

8. The washing machine according to claim 6, further comprising a rotation count detector (51) that detects a count of rotation of the permanent magnet motor (11), wherein the magnetism controller (30, 32) magnetizes the permanent magnet (97) provided that the count of rotation detected by the rotation count detector (51) is equal to or less than a predetermined threshold while the regenerative braking is applied.

9. The washing machine according to claim 7, further comprising a rotation count detector (51) that detects a count of rotation of the permanent magnet motor (11), wherein the magnetism controller (30, 32) magnetizes the permanent magnet (97) provided that the count of rotation detected by the rotation count detector (51) is equal to or less than a predetermined threshold while the regenerative braking is applied.

10. A washing machine comprising:
a permanent magnet motor (11) that includes a rotor (92) and that drives rotation for execution of a wash operation;
a permanent magnet (97) that is provided on the rotor side and that has a level of coercivity allowing variation in an amount of magnetism with ease, and
a magnetism controller (30, 32) that produces an excitation current to vary the amount of magnetism of the permanent magnet (97);
wherein the magnetism controller (30, 32), when demagnetizing the permanent magnet (97), magnetizes the permanent magnet (97) prior to the demagnetization.
